Europäisches Patentamt

European Patent Office

Office européen des brevets

(11) Publication number: **0 058 004**

**B1**

# EUROPEAN PATENT SPECIFICATION

(45) Date of publication of patent specification: **17.07.85**

(51) Int. Cl.⁴: **B 29 C 45/27**

(21) Application number: **82300355.3**

(22) Date of filing: **25.01.82**

(54) **Inclined insulated runner multicavity plastic injection molding.**

(30) Priority: **30.01.81 US 230300**

(43) Date of publication of application:
**18.08.82 Bulletin 82/33**

(45) Publication of the grant of the patent:
**17.07.85 Bulletin 85/29**

(84) Designated Contracting States:
**AT BE CH DE FR GB IT LI NL SE**

(56) References cited:
**CH-A- 451 494**
**CH-A- 622 985**
**DE-A-2 852 458**
**GB-A-2 044 666**
**JP-A-44 021 230**
**US-A-3 021 568**
**US-A-3 776 676**
**US-A-4 059 384**

**PLASTVERARBEITER, Vol. 29, No. 11,**
**November 1978 Speyer am Rhein H. SOWA**
**"Wirtschaftlicher Fertigen durch verbesserte**
**Angusssysteme" pages 587 to 591**

**KUNSTSTOFFE, Vol. 67, No. 7, July 1977**
**München W. HARTMANN "Heisskanalsysteme**
**für das angusslose seitliche Direktanspritzen"**
**pages 366 to 369**

(73) Proprietor: **SORENSEN, Jens Ole**
**P.O. Box 2274**
**Rancho Santa Fe, CA 92067 (US)**

(72) Inventor: **Sorensen, Jens Ole**
**P.O. Box 2274**
**Rancho Santa Fe California 92067 (US)**

(74) Representative: **Wilson, Nicholas Martin et al**
**WITHERS & ROGERS 4 Dyer's Buildings Holborn**
**London EC1N 2JT (GB)**

(56) References cited:
**PLASTVERARBEITER, Vol. 30, No. 11,**
**November 1979 Speyer am Rhein W.**
**WADSACK "Das "kalte" Heisskanalsystem"**
**page 706**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Field of the Invention

The invention relates to a plastic injection mold and to a method of injection molding of plastics material.

The invention permits the angle of inclination to the injection point of the surface of the product to be up to 90° rather than the typical 0°. The angle of inclination to the injection point of the surface of an injection molded product is here defined to mean: the smallest angle that the normal to the injection point makes with the production mold ejection opening direction.

The normal to the injection point of the surface of the product is here defined to mean: a line going through the injection point so that the line is perpendicular to the tangent plane to the injection point of the surface of the product.

There may be a number of reasons for choosing to place the injection point of the surface of an injection molded product so that the angle of inclination is significantly larger than 0°, perhaps close to 90°. Some of these reasons are larger strength, less deformation or more beauty of the molded product.

Discussion of Prior Art

Heretofore multicavity insulated runner injection molding of a product with a small angle of inclination to the injection point of up to about 20° has been solved successfully by employing secondary gate runners which are not inclined to the mold opening direction.

But in the situation where the angle of inclination has been more than about 20°, multicavity insulated runner injection molding has not been possible and manufacturing of products with an angle of inclination to the injection point of more than about 20° has had to be produced with other multicavity injection molding systems such as the submarine gate runner injection molding system or the hot runner injection molding system. Both of these systems have distinct disadvantages. In the submarine gate runner injection molding system a plastic impression of the submarine gate runner is produced simultaneously with the molded product. First this plastic impression has to be sorted from the molded product and then recycled by some costly process into the injection molding process. A submarine gate runner injection molding system is disclosed in U.S. Application 3776676 where a system is described for molding plastic screw caps in which a hot, self-insulated primary runner feeds a number of relatively short, inclined secondary runners with hot plastic. However the secondary runners are sprue channels leaving solidified plastics sprues which are produced with the caps. Another similar arrangement is disclosed in Japanese Patent Specification No. 44—21230. In the hot runner injection molding system the production cycle period is relatively long because some heat leaks from the heated hot runner manifold via the hot runner nozzles to the walls of the chilling cavities, thereby extending the required cooling period of the molded product. Impurities often get trapped in the hot runner system, thereby plugging the hot runner nozzle. Electrical heating elements often stop functioning, causing the hot runner system to freeze. Hot molten plastic often leaks out of the hot runner system, causing loss of material and reduced injection pressure and short circuited electrical heating elements.

According to the present invention there is provided a plastics injection mold for cyclic operation comprising a first mold part and a second mold part defining a mold cavity therebetween, the first and second mold parts being movable relative to one another to allow release of a molded product from the mold cavity and defining a mold opening direction, the second mold part comprising a first section and a second section encompassing a primary runner, the first and second sections, upon termination of the normal cyclic operation, being separable allowing removal of a runner impression of the primary runner in order to re-establish the normal production cycle the primary runner leading into a secondary runner, the secondary runner leading to said mold cavity the secondary runner being inclined to said mold opening direction; and the mold further comprising means for cooling the mold cavity and the walls of said secondary runner, characterised in that said cooling means is operative to enable cooling of the walls of the inclined secondary runner, so that the runner during normal cyclic operation does not solidify over its entire cross sectional region but remains molten in a central zone.

The inclined secondary runner leads directly from the junction between said first and second sections to the mold cooling cavity, so that no impression of the inclined secondary runner can be released with the molded product during normal cyclic operation, but only after the normal production cycle is terminated can the impression of the inclined secondary runner be removed upon separation of said first and second sections.

The present invention is not burdened by the problems and disadvantages of the submarine gate runner and hot runner systems and methods. Injection molding in accordance with the present invention does not during its normal production cycle simultaneously produce any runner plastic impression which must be sorted from the molded product and recycled into the molding process. The injection molding of the present invention has a short production cycle, does not easily trap impurities, is not dependent on heating elements and the leaking problem is solved.

According to another aspect of the invention there is provided a method of insulated runner or cooled runner plastics injection molding utilizing a mold for cyclic operation comprising a first mold part and a second mold part defining a mold cavity therebetween, the first and second mold parts being movable relative to one another defining a mold opening direction, the second mold part comprising a first section and a second section encompassing a primary runner, the primary runner leading into a secondary runner being inclined to said opening direction, the secondary runner leading, via a restriction gate to said mold cavity, and the mold further comprising means for cooling the walls of said secondary runner, wherein each normal production cycle comprising the steps of:

(a) injecting a hot molten plastic through the primary runner via the inclined secondary runner and the restriction gate to fill the cavity;

(b) cooling the walls of the inclined secondary runner and the mold cavity thereby producing a molded product,

(c) moving the first mold part in relation to the second mold part in order to release the molded product, wherein, when the normal production cycle is terminated, the method additionally comprises:

(d) separating said first and second sections to remove a runner impression of said primary runner which has solidified in its entire cross-sectional region for re-establishing the normal production cycle following such termination, the method being characterised by: step (a) comprising the step of:

(a1) injecting through said inclined secondary runner which leads directly from the junction between said first and second sections to said mold cavity,

step (b) comprising the step of:

(b1) cooling the walls of the inclined secondary runner so that it does not solidify over its entire cross-sectional region but remains molten in a central zone of the region,

step (c) comprising the step of:

(c1) releasing the molded product without releasing any runner impression of said inclined secondary runner,

step (d) comprising the step of:

(d1) removing a runner impression of the inclined secondary runner when separating said first and second sections.

The invention will now be described by way of example with reference to the accompanying drawings in which:

Figure 1 is a schematic diagram of a production mold illustrating the main parts without details;

Figure 2 is a schematic detailed diagram of an unsuccessful prior art production mold in the same position as the mold illustrated in Figure 1; and

Figures 3, 4 and 5 are schematic detailed diagrams of preferred embodiments of production molds in accordance with the invention.

The present invention is directed to a modified insulated runner system which may be called "the cooled runner system" for multicavity injection molding of polystyrene.

The cooled runner system differs from the insulated runner system because, in order successfully to inject polystyrene in a prior art insulated runner mold made to injection mold, for instance, a polyolefin, it is necessary to make the following major alterations from the minimum requirements needed in order to injection mold the polyolefin:

(1) it is customary, when injection molding a polyolefin and employing an insulated runner system to increase the temperature of the injected polyolefin above the temperature required of such injected polyolefin when employing a hot runner system; in the case of a polystyrene this increase in temperature must be larger.

(2) it is customary when injection molding a polyolefin and employing an insulated runner system to increase the pressure of the injected polyolefin above the pressure required of such injected polyolefin when employing a hot runner system; in the case of a polystyrene this increase must also be larger.

(3) the cross-sectional areas of the primary runner system must be enlarged.

(4) the cross-sectional areas of the secondary feeding runners must be enlarged.

(5) the cross-sectional areas of the gate restrictions must be enlarged.

(6) the frequency of the normal production cycle must be increased.

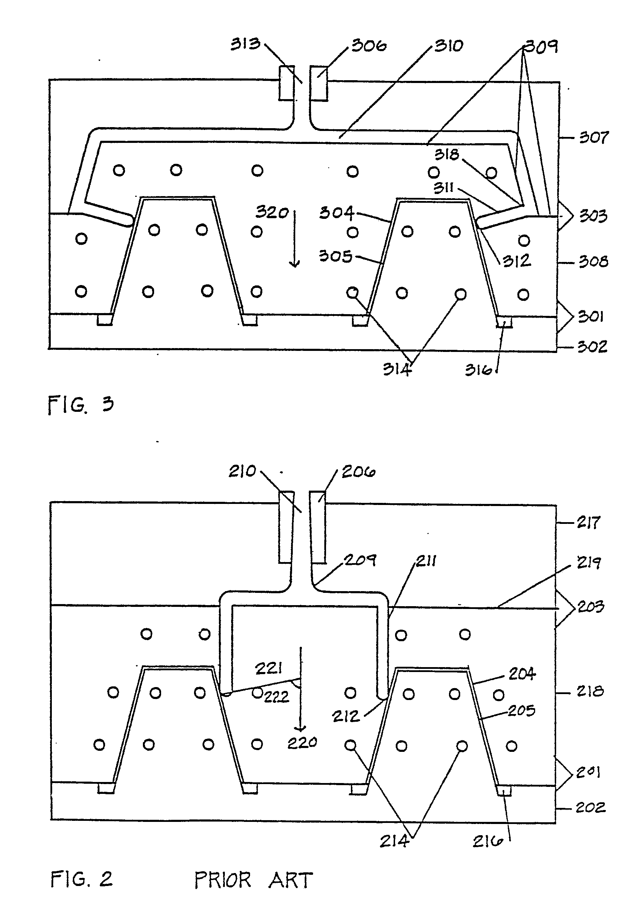

Experiments have shown, not only that the cooled runner system is possible, but also the surprising results that the cooling period could be reduced by approximately one second in each production cycle from the normal cooling period obtainable with a standard hot runner system. The shorter cooling period is an important contributing reason that the hot molten polystyrene in the hot runner system does not freeze. This is because there is not enough heat loss during the short cycle time available to cause the hot molten plastic in the runner system to freeze. Figures 3, 4 and 5, being the preferred embodiments of the present invention illustrate examples of cooled runner injection molding of polystyrene.

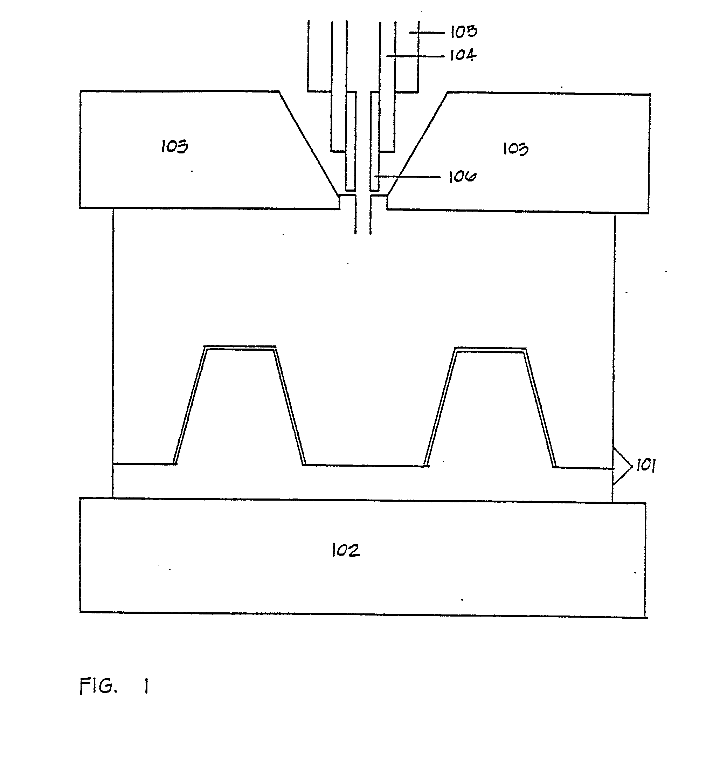

Referring now to the drawings in detail, Figure 1 illustrates a basic production mold 101 whih may be any one of the molds described in Figures 2, 3, 4, and 5 below. The production mold 101 is positioned in a clamping unit consisting of movable part 102 and the stationary part 103. Also illustrated is an injection unit 104 with a heating element 105 and an injection nozzle 106.

In the past a prior art insulated runner mold 201, illustrated in Figure 2, has a movable mold part 202, which is connected to the movable clamping unit part 102, and a stationary mold part 203, which is connected to the stationary clamping unit part 103. The mold includes two chilling cavities 204, in each of which is formed a molded product 205, such as a drinking glass. Plastics material for molding is introduced into the mold 201 via a sprue bushing 206 which cooperates with the injection nozzle 106 (shown in Figure 1). The stationary part of the mold 203 is sub-divided into first and second sectons 217, 218 which are attached together releasably along a parting line 219. The sprue bushing 206 is inserted in the first section 217 of the stationary mold part 203, and a primary runner system 209 of circular cross-section is channelled, through the sprue bushing 206, the first stationary mold section 217 and divides into two branches positioned in the parting surface 219. As a continuation of the primary runner system 209, secondary runners 211 also of circular cross-section are positioned in the second stationary mold section 218. The secondary runners 211 are parallel to the mold opening-direction 220 and lead, through restriction gates 212, to the chilling cavities 204. The walls of the chilling cavities 204 contain a cavity cooling system 214 and each chilling cavity 204 has a stripper sleeve 216. In addition to the mold opening direction 220, there is also illustrated the normal 221 to the injection point 212 of the surface of the product 205 and the resulting angle of inclination 222 which is about 60° in this figure.

The operation of the system, which is illustrated in Figure 2, and which is positioned as illustrated in Figure 1 is as follows: hot molten plastics material 210 is injected by the injection unit 104 through the injection nozzle 106 into the primary runner system 209. The plastics material is directed through the primary runner system 209 to the secondary runners 211 through the restriction gates 212 which are of circular cross-section and into the chilling cavities 204. While the molten plastics material flows through the primary runner system 209 and the secondary runners 211, heat is transferred to the walls thereof, due to their lower temperature. The temperature of the walls is lower than the temperature of the flowing polystyrene because the walls are cooled by the cavity cooling system 214. However, the temperature is such that plastic in the primary runner system 209 and in the secondary runners 211 does not solidify over the entire circular cross-sectional region but remains molten in a central zone.

The solid plastics outer portions of the primary runner system 209 helps to reduce or prevent any leakage of molten plastics material which otherwise may leak from the primary runner system 209 at the parting surface 219. The plastics material which does enter the chilling cavities 204 is cooled by the cavity cooling system 214 so that the remaining plastics material solidifies producing a molded product 205.

At this stage the movable clamping unit part 102 is moved away from the stationary clamping unit part 103 whereby the movable mold part 202 is separated from the stationary mold part 203 and the molded product 205 is ejected by the stripper sleeve 216. Then the movable clamping unit part 102 is moved toward the stationary clamping unit part 102 whereby the movable mold part 202 is combined with the stationary mold part 203, which ends the normal production cycle and a new cycle is ready to begin.

When for some reason, such as intent or malfunction (like an impurity plugging a restriction gate 212) the normal production cycle is terminated, then the molten polystyrene within the primary runner system 210 and secondary runners 211 lose additional heat and solidifies throughout its entire cross-sectional region. The normal production cycle may hereafter be re-established by attaching the second stationary mold section 218 to the movable clamping unit 102 and disconnecting the second stationary mold section 218 from the first stationary mold section 217. Then the movable clamping unit part 102 is moved away from the stationary clamping unit 103 whereby the second stationary mold section 218 is separated from the first stationary mold section 217 along the separation line 219 in order to expose the combined unit of the solidified impression of the polystyrene in the primary runner system 209 and the solidified impressions of the polystyrene in the secondary runners 211. The combined unit is hereafter removed and the movable clamping unit part 102, is moved towards the stationary clamping unit 103 whereby the second stationary mold section 218 is once again combined with the first stationary mold section 217 in order to reattach the second stationary mold section 218 with the first stationary mold section 217 and disconnect the second stationary mold section 218 with the movable clamping unit part 102, which leaves the system ready for the normal production cycle to begin.

The reason that the system just described is not successful in practice is that the wall between the secondary runners 211 which are not inclined and the chilling cavity 204 is very thin, and will in an uneconomically short time deteriorate, thereby increasing the area of the cross-sectional region of the restriction gates 212 preventing further production.

The first preferred embodiment of this invention is illustrated in Figure 3. A cooled runner mold 301 has a movable mold part 302, which is connected to the movable clamping unit part 102, and a stationary mold part 303, which is connected to the stationary clamping unit 103. The cooled runner mold 301 includes two chilling cavities 304 each for enclosing a molded product 305 such as a drinking glass with a wall thickness of 0.7 mm. The cooled runner mold 301 also includes a sprue bushing 306 which meets the injection nozzle 106. The sprue bushing 306 is inserted in a first section 307 of the stationary mold part 303. The first section 307 is attached to a second section 308 of the stationary mold part 303 and separated therefrom by a parting surface 309. A primary runner system 310 of circular cross-section is channelled through the sprue bushing 306, the first stationary mold section 307 and divides into two branches positioned in the parting surface 309. As a continuation of the primary runner system 310, inclined secondary runners 311 of circular cross-section are positioned in the secondary stationary mold section 308. The inclined secondary runners 311 lead through restriction gates 312 to chilling cavities 304. The walls of the chilling cavities 304 contain a cavity cooling system 314 and each chilling cavity 304 has a stripper sleeve 316. Also illustrated is the mold opening direction 320.

The operation of the system illustrated in Figure 3 and which is positioned as illustrated in Figure 1, is as follows: hot molten high impact polystyrene 313 at a temperature of 250 degrees Centigrade and a pressure of 1500 kg per sq. cm. is injected by the injection unit 104 through the injection nozzle 106 into the primary runner system 310. The polystyrene is directed through the primary runner system 310 to the inclined secondary runners 311 and is conducted through the restriction gates 312, which have circular cross-sectional areas with an average diameter of 1.8 mm, into the chilling cavities 304. While the molten polystyrene flows through the primary runner system 310 and the inclined secondary runners 311, both of which have an average diameter of 14 mm., heat is transferred to the walls thereof. The temperature of the walls is maintained lower than the temperature of the flowing polystyrene because the walls are cooled by the cavity cooling system 314. However, the temperature is such that the polystyrene in the primary runner system 310 and in the inclined secondary runners 311 does not solidify over their entire circular cross-sectional region but remains molten in a central zone. The solid outer portions of the cross-sectional region help to reduce or prevent any leakage of molten polystyrene which otherwise may leak from the primary runner system 310 at the parting surface 309. The polystyrene which has entered the chilling cavities 304 is cooled in a short cooling period of 1.2 seconds by the cavity cooling system 314 whereby the cooled polystyrene solidifies, thereby creating a molded product 305.

The movable clamping unit part 102 is moved away from the stationary clamping unit part 103 so that the movable mold part 302 is separated from the statonary mold part 303 and the molded product 305 is ejected by the stripper sleeve 316. Then the movable clamping unit part 102 is moved toward the stationary clamping unit part 103 whereby the movable mold part 302 is combined with the stationary mold part 303, which ends the normal production cycle with a cycle time of 2.3 seconds, and a new cycle is ready to begin.

If for some reason a restriction gate 312 should become blocked, even though this gate has the large cross-sectional diameter of 1.8 mm., the normal production cycle is terminated, then the molten polystyrene within the primary runner system 310 and the inclined secondary runners 311 loses additional heat causing the molten polystyrene to solidify throughout its entire cross-sectional region. The normal production cycle may hereafter be re-established by attaching the second stationary mold section 308 to the movable clamping unit part 102 and disconnecting the second stationary mold section 308 from the first stationary mold section 307. Then the movable clamping unit part 102 is moved away from the stationary clamping unit 103 whereby the second stationary mold section 308 is separated from the first stationary mold section 307 along the parting surface 309 in order to expose the combined unit 318 of the solidified impression of the polystyrene in the primary runner system 310 and the solidified impressions of the polystyrene in the inclined secondary runners 311. The combined unit 318 is hereafter removed in such a manner that the impressions of the restriction gate 312 on the solidified impression of the inclined secondary runners 311 is removed through the inclined secondary runners 311 in a direction which is not parallel to the mold opening direction 320. In view of the inclination of the secondary runners 311 it is necessary to subdivide the combined unit 318 by breaking off the solidified impression of the primary injection system 310 in order to remove the solidified impressions of the inclined secondary runners 311. The movable clamping unit part 102 is then moved towards the stationary clamping unit 103 whereby the second stationary mold section 308 is combined with the first stationary mold section 307 in order to re-attach the second stationary mold section 308 with the first stationary mold section 307 and disconnect the second stationary mold section 308 with the movable clamping unit part 102, which leaves the system ready for the normal production cycle to begin.

Since the secondary runners 311 are inclined, the wall between the secondary runners 311 and the chilling cavity 304 is not made so thin that it will deteriorate.

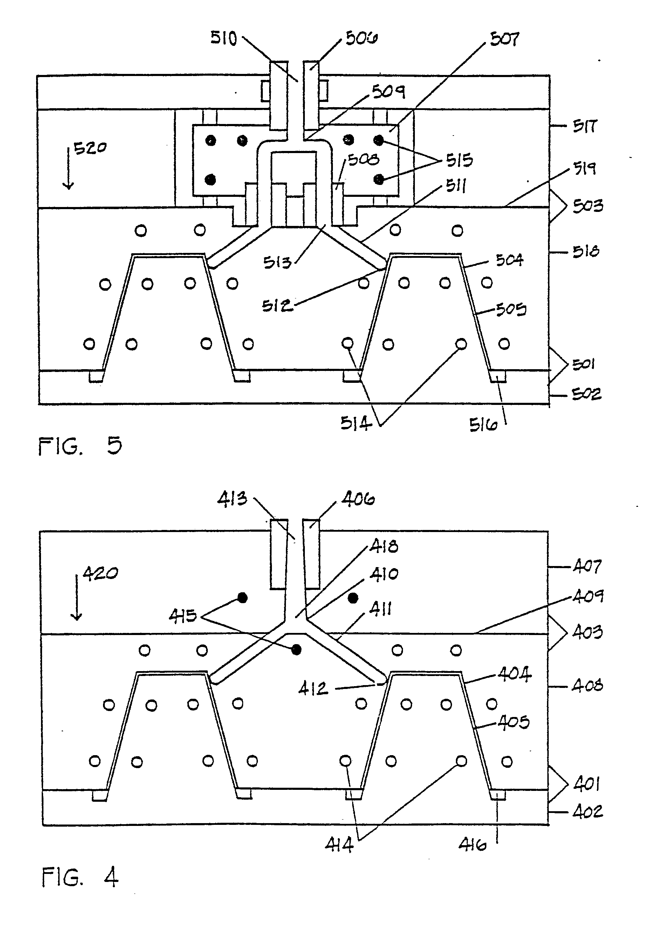

Illustrated in Figure 4 is a second preferred embodiment of the invention. In this embodiment a cooled runner mold 401 has a movable mold part 402, which is connected to the movable clamping unit part 102, and a stationary mold part 403, which is connected to the stationary clamping unit 103. The cooled runner mold 401 includes two chilling cavities 404, each for enclosing a molded product 405 such as a drinking glass with a wall thickness of .55 mm. The cooled runner mold 401 also includes a sprue bushing 406 which meets the injection nozzle 106 and is inserted in a first section 407 of the stationary mold part 403. The first section 407 is attached to a second section 408 of the stationary mold part 403 and separated by a parting surface 409. A primary runner system 410 of circular cross-section is channelled through the sprue bushing 406, the first stationary mold section 407 and divides into two branches positioned in the parting surface 409. As a continuation of the primary runner system 410, are inclined secondary runners 411, also of circular cross-section, positioned in the second stationary mold section 408. The secondary runners 411 lead through restriction gates 412 to chilling cavities 404. The walls of the chilling cavities 404 contain a cavity cooling system 414 and the walls of the stationary mold part 403 contain a runner cooling system 415. Each chilling cavity 404 has a stripper sleeve 416. The mold opening direction is referenced 420.

The operation of the system which is illustrated in Figure 4 and which is positioned as illustrated in Figure 1, as is follows: hot molten general

purpose polystyrene 413 at a temperature of 270 degrees Centigrade and a pressure of 1500 kg per sq. cm. is injected by the injection unit 104 through the injection nozzle 106 into the primary runner system 410. The polystyrene is directed through the primary runner system 410, the average cross-sectional diameter of which is 13 mm., to the inclined secondary runners 411, the average cross-sectional diameter of which is also 13 mm., and is conducted through the restriction gates 412 with circular cross-sectional areas with an average diameter of 1.6 mm into the chilling cavities 404. While the molten plastic flows through the primary runner system 410 and the inclined secondary runners 411 heat is transferred to the walls of the primary runner system 410 and the walls of the inclined secondary runners 411, which have a temperature which is lower than the temperature of the flowing polystyrene due to the walls being cooled by the runner cooling system 415. However the temperature is such that the polystyrene in the primary runner system 410 and in the inclined secondary runners 411 does not solidify over their entire circular cross-sectional region but remains molten in a central zone.

The solid outer portions of the cross-sectional region help to reduce or prevent any leakage of the molten polystyrene which may be leak from the primary runner system 410 at the parting surface 409. The polystyrene which has entered the chilling cavities 404 is cooled in a short cooling period of 0.9 seconds by the cavity cooling system 414 whereby the cooled polystyrene solidifies thereby creating a molded product 405.

The movable clamping unit part 102 is moved away from the stationary clamping unit part 103 whereby the movable mold part 402 is separated from the stationary mold part 403 and the molded product 405 is ejected by the stripper sleeve 416. Then the movable clamping unit part 102 is moved toward the stationary clamping unit part 103 whereby the movable mold part 402 is combined with the stationary mold part 403, which ends the normal production cycle with a cycle period of 2.0 seconds, and a new cycle is ready to begin.

When for some reason, such as an impurity plugging a restriction gate 412, even though this gate has the large cross-sectional diameter of 1.6 mm, the normal production cycle is terminated, then the molten polystyrene within the primary runner system 410 and inclined secondary runners 411 loses additional heat causing the molten polystyrene to solidify throughout its entire cross-sectional region. The normal production cycle may hereafter be re-established by attaching the second stationary mold section 408 to the movable clamping unit part 102 and disconnecting the second stationary mold section 408 from the first stationary mold section 407. Then the movable clamping unit part 102 is moved away from the stationary clamping unit 103 whereby the second stationary mold section 408 is separated from the first stationary mold section 407 along the parting line 409 in order to expose the combined unit 418 of the solidified impression of the polystyrene in the primary runner system 410 and the solidified impression of the polystyrene in the inclined secondary runners 411. The combined unit 418 is hereafter removed in such a manner that the impressions of the restriction gate 412 on the solidified impression of the inclined secondary runners 411 are removed through the inclined secondary runners 411 in a direction which is not parallel to the mold opening direction 420. In view of the inclination of the secondary runners it is necessary to subdivide the combined unit 418 by breaking off the solidified impression of the primary injection system 410 in order to remove the solidified impressions of the inclined secondary runners 411. Then the movable clamping unit part 102 is moved towards the stationary clamping unit 103 whereby the second stationary mold section 408 is combined with the first stationary mold section 407 in order to re-attach the second stationary mold section 408 with the first stationary mold section 407 and disconnect the second stationary mold section 408 with the movable clamping unit part 102, which leaves the system ready for the normal production cycle to begin.

Since the secondary runners 411 are inclined, the wall between the secondary runners 411 and the chilling cavity 404 is not made so thin that it will deteriorate.

A third preferred embodiment of the invention is illustrated in Figure 5. In this embodiment a cooled runner, hot runner, combination mold 501 has a movable mold part 502, which is connected to the movable clamping unit part 102, and a stationary mold part 503, which is connected to the stationary clamping unit 103. The stationary mold part 503 consists of a first section 517, which is attached to the stationary clamping unit 103, and a second section 518 separated by a parting surface 519. The mold 501 includes two chilling cavities 504, each for enclosing a molded product 505 such as a drinking glass with a wall thickness of .85 mm. The cooled runner mold 501 also includes a sprue bushing 506 which meets the injection nozzle 106 and is connected to a hot runner manifold 507. The hot runner manifold 507 is connected to two hot runner nozzles 508. A hot primary runner system 509, positioned in the first section 517 of the stationary mold part 503, is channelled through the sprue bushing 506, passing through the hot runner manifold 507 and through the hot runner nozzles 508 with gates 513 which lead to inclined secondary runners 511, positioned in the second stationary mold section 518. The inclined secondary runners 511 lead through restriction gates 512 to chilling cavities 504. The walls of the chilling cavities 504 contain a cavity cooling system 514 and each cavity has a stripper sleeve 516. The hot runner manifold 507 contains a heating system of heating elements 515. The mold opening direction is referenced 520.

The operation of the system illustrated in Figure 5 and which is positioned as illustrated in Figure 1, is as follows: hot molten polystyrene 510, such as high impact polystyrene, at a temperature of 230 degrees Centigrade, and a pressure of 1500 kg per sq. cm. is injected into the hot primary runner system 509 by the injection unit 104 through the injection nozzles 106. The hot polystyrene is directed through the hot primary runner system 509, and enters, through hot runner gates 513, the inclined secondary runners 511 which have circular cross-sectional areas of an average diameter of 15 mm. From the secondary runners the polystyrene is conducted through the restriction gates 512 which are of circular cross-section having an average diameter of 2.0 mm, into the chilling cavities 504.

While the molten plastic flows through the inclined secondary runners 511, heat is transferred to the walls thereof due to its walls having a temperature which is lower than the temperature of the flowing polystyrene. This is because the walls of the inclined secondary runners 511 are cooled by the cavity cooling system 514. However, the temperature is such that the polystyrene in the inclined secondary runners 511 does not solidify over their entire circular cross-sectional region, but remains molten in a central zone.

The heating elements 515 heat the hot primary runner system 509 in order to reduce or prevent heat loss from the directed polystyrene. The polystyrene which has entered the chilling cavities 504 is cooled in a short cooling period of 1.4 seconds by the cavity cooling system 514 whereby the cooled polystyrene solidifies, thereby creating a molded product 505.

The movable clamping unit part 102 is moved away from the stationary clamping unit part 103 whereby the movable mold part 502 is separated from the stationary mold part 503 and the molded product 505 is ejected by the stripper sleeve 516. Then the movable clamping unit part 102 is moved toward the stationary clamping unit part 103 whereby the movable mold part 502 is combined with the stationary mold part 503, which ends the normal production cycle with a cycle period of 2.5 seconds, and a new cycle is ready to begin.

When for some reason, a restriction gate 512 becomes blocked, even though this gate has the large cross-sectional diameter of 2.0 mm., the normal production cycle is terminated, then the molten polystyrene within the inclined secondary runners 511 loses additional heat to the walls of the secondary runners 511, causing the molten polystyrene to solidify throughout its entire cross-sectional region.

The hot molten polystyrene 510 in the hot primary runner system 509 on the contrary does not solidify because the heating element 515 heats the hot runner system 509. The normal production cycle may hereafter be re-established by attaching the second stationary mold section 518 to the movable clamping unit part 102 and disconnecting the second stationary mold section 518 from the first stationary mold section 517. Then the movable clamping unit part 102 is moved away from the stationary clamping unit 103 whereby the second stationary mold section 518 is separated from the first stationary mold section 517 along the parting line 519 in order to expose the solidified impressions of the polystyrene in the inclined secondary runners 511. The solidified impressions are hereafter removed in such a manner that the impressions of the restriction gate 512 on the solidified impression of the inclined secondary runners 511 are removed through the inclined secondary runners 511 in a direction which is not parallel to the mold opening direction 520.

The movable clamping unit part 102 is hereafter moved towards the stationary clamping unit 103 whereby the second stationary mold section 518 is combined with the first stationary mold section 517 in order to re-attach the second stationary mold section 518 with the first stationary mold section 517 and disconnect the second stationary mold section 518 with the movable clamping unit part 102, which leaves the system ready for the normal production cycle to begin.

Impurities do not get trapped in the hot runner nozzles 508 because the openings of the hot runner gates 513 are not restricted. There is a certain heat transfer from the hot runner nozzle 508 to the walls of the chilling cavity 504, but this is too far removed from the walls of the chilling cavities 504 to cause any significant heating thereof.

Since the secondary runners 511 are inclined, the wall between the secondary runners 511 and the chilling cavity 504 is not made so thin that it will deteriorate.

While the above description discloses preferred embodiments of the invention by way of example, it will be understood that, other variations are possible within the scope of the invention. For example sandwich mold systems wherein the mold part which contains the secondary runners has chilling cavities on both sides of said mold part.

**Claims**

1. A plastics injection mold for cyclic operation comprising a first mold part (302, 402, 502) and a second mold part (303, 403, 503) defining a mold cavity (304, 404, 504) therebetween, the first and second mold parts being movable relative to one another to allow release of a molded product from the mold cavity and defining a mold opening direction (320, 420, 520), the second mold part comprising a first section (307, 407, 517), and a second section (308, 408, 518) encompassing a primary runner (310, 410, 509), the first and second sections, upon termination of the normal cyclic operation, being separable allowing removal of a runner impression of the primary runner in order to re-establish the normal production cycle, the primary runner (310, 410, 509) leading into a secondary runner (311, 411, 511), the secondary runner leading to said mold cavity (304, 404, 504); the secondary runner being inclined to said mold opening direction (320, 420, 520); and the mold further comprisng means (314, 414, 514) for cooling the mold cavity and the walls of said secondary runner, characterised in that said cooling means (314, 414, 514) is operative to enable cooling of the walls of the inclined secondary runner (311, 411, 511), so that the runner during normal cyclic operation does not solidify over its entire cross sectional region but remains molten in a central zone;

The inclined secondary runner (311, 411, 511) leads directly from the junction between said first (307, 407, 517) and second sections (308, 408, 518) to the mold cooling cavity (304, 404, 504), so that no impression of the inclined secondary runner can be released with the molded product during normal cyclic operation, but only after the normal production cycle is terminated can the impression of the inclined secondary runner be removed upon separation of said first and second sections.

2. A plastics injection mold according to claim 1 characterised in that the walls of the primary runner (509) are heated by means (515).

3. A method of insulated runner or cooled runner plastics injection molding utilizing a mold for cyclic operation comprising a first mold part (302, 402, 502) and a second mold part (303, 403, 503) defining a mold cavity (304, 404, 504) therebetween, the first and second mold parts being movable relative to one another defining a mold opening direction (320, 420, 520), the second mold part comprising a first section (307, 407, 517) and a second section (308, 408, 518) encompassing a primary runner (310, 410, 509), the primary runner leading into a secondary runner (311, 411, 511) being inclined to said opening direction, the secondary runner leading, via a restriction gate (312, 412, 512) to said mold cavity, and the mold further comprising means for cooling (314, 414, 514) the walls of said secondary runner, wherein each normal production cycle comprising the steps of:

(a) injecting a hot molten plastic through the primary runner (310, 410, 509) via the inclined secondary runner (311, 411, 511) and the restriction gate, to fill the cavity (304, 404, 504),

(b) cooling the walls of the inclined secondary runner (311, 411, 511) and the mold cavity (304, 404, 504) thereby producing a molded product,

(c) moving the first mold part (302, 402, 502) in relation to the second mold part (303, 403, 503) in order to release the molded product,

wherein, when the normal production cycle is terminated, the method additionally comprises:

(d) separating said first (307, 407, 517) and second sections (308, 408, 518) to remove a runner impression of said primary runner which has solidified in its entire cross-sectional region for re-establishing the normal production cycle following such termination, the method being characterised by:

step (a) comprising the step of:

(a1) injecting through said inclined secondary runner (311, 411, 511) which leads directly from the junction between said first and second sections to said mold cavity (304, 404, 504),

step (b) comprising the step of:

(b1) cooling the walls of the inclined secondary runner (311, 411, 511) so that it does not solidify over its entire cross sectional region but remains molten in a central zone of the region,

step (c) comprising the step of:

(c1) releasing the molded product without releasing any runner impression of said inclined secondary runner,

step (d) comprising the step of:

(d1) removing a runner impression of the inclined secondary runner when separating said first and second sections.

4. A method according to claim 3 comprising the additional step of:

(e) heating at least a region of the walls of the primary runner system in order to reduce or prevent heat loss from the injected plastic to the region of the walls of the primary runner system.

5. A method according to claim 3 wherein step (d1) comprises the additional step of:

(d2) subdividing the combined unit of the solidified impression of the plastic in the primary runner system and solidified impression of the plastic in the inclined secondary runner in order to remove the solidified impression of the plastic in the inclined secondary runner.

6. A method of cyclic insulated runner or cooled runner plastics injection molding wherein each production cycle comprises the steps of:

(a) providing a mold having a first mold part (302, 402, 502) and a second mold part (303, 403, 503) defining a mold cavity (304, 404, 504) therebetween, the first and second parts being movable relative to one another and defining a mold opening direction (320, 420, 520);

(b) providing the second mold part (303, 403, 503) with first and second separable sections (307, 407, 517: 308, 408, 518), the first section including a primary runner (340, 410, 509) and the second section including a secondary runner (311, 411, 511);

(c) injecting a hot molten plastic into the primary runner (310, 410, 509);

(d) directing the injected plastic through the primary runner into the inclined secondary runner;

(e) leading the directed plastic through the inclined secondary runner to the mold cavity (304, 404, 504);

(f) cooling the led plastic in the inclined secondary runner by transferring heat from the plastic to the walls of the inclined secondary runner;

(g) cooling the conducted plastic in the mold cavity (304, 404, 504) by a cavity cooling system whereby the cooled plastic solidifies thereby creating a molded product; and

(h) ejecting the molded product from the mold cavity;

characterised by cooling the led plastic in the secondary runner such that it does not solidify over its entire cross-sectional region but solidifies at an outer region and remains molten in a central zone thereof; and ejecting the molded product from the mold cavity without any plastic impression of the secondary runner.

## Revendications

1. Moule pour moulage par injection de matière plastique en fonctionnement cyclique comprenant une première partie de moule (302, 402, 502) et une seconde partie de moule (303, 403, 503) définissant entre elles une cavité de moulage (304, 404, 504), la première et la seconde partie de moule étant déplaçables l'une par rapport à l'autre afin de permettre l'évacuation d'un produit moulé de la cavité de moulage et définissant une direction d'ouverture du moule (320, 420, 520), la seconde partie de moule comprenant une première section (307, 407, 517) et une seconde section (308, 408, 518) renfermant un canal de coulée primaire (310, 410, 509), la première et la seconde section étant aptes à être séparées, lorsque le fonctionnement cyclique normal est terminé, de façon à permettre l'évacuation d'une empreinte du canal de coulée primaire afin de rétablir le cycle de production normal, le canal de coulée primaire (310, 410, 509) menant à un canal de coulée secondaire (311, 411, 511), le canal de coulée secondaire conduisant à la cavité du moule (304, 404, 504); le canal de coulée secondaire étant incliné par rapport à la direction d'ouverture du moule (320, 420, 520) et le moule comprenant en outre des moyens (314, 414, 514) pour refroidir la cavité de moulage et les parois de ce canal de coulée secondaire, caractérisé en ce que ces moyens de refroidissement (314, 414, 514) sont aptes à refroidir les parois du canal de coulée secondaire incliné (311, 411, 511) de telle sorte que le canal de coulée ne se solidifie pas pendant le fonctionnement cyclique normal sur toute sa section transversale mais reste à l'état fondu dans une zone centrale, en ce que le canal de coulée secondaire incliné (311, 411, 511) mêne directement de la jonction entre les première (307, 407, 517) et seconde sections (308, 408, 518) à la cavité de refroidissement du moule (304, 404, 504) de sorte qu'aucune empreinte du canal de coulée secondaire incliné ne peut être dégagée avec le produit moulé pendant le fonctionnement cyclique normal, et que l'empreinte du canal de coulée secondaire peut être élevée seulement après que le cycle de production normal ait été achevé, lors de la séparation de la première et de la seconde sections.

2. Moule selon la revendication 1, caractérisé en ce que les parois du canal de coulée primaire (509) sont chauffées par des moyens de chauffage (515).

3. Procédé de moulage par injection de matières plastiques avec canal de coulée refroidi ou isolé, utilisant un moule pour fonctionnement cyclique comprenant une première partie du moule (302, 402, 502) et une seconde partie (303, 403, 503) définissant entre elles une cavité de moulage (304, 404, 504) la première et la seconde partie de moule étant déplaçables l'une par rapport à l'autre et définissant une direction d'ouverture du moule (320, 420, 520) la seconde partie de moule comprenant une première section (307, 407, 517) et une seconde section (308, 408, 518) renfermant un canal de coulée primaire (310, 410, 509) le canal de coulée primaire menant à un canal de coulée secondaire (311, 411, 511) qui est incliné par rapport à la direction d'ouverture, le canal de coulée secondaire menant par l'intermédiaire d'une ouverture de restriction (312, 412, 512) à cette cavité de moulage, et le moule comprenant en outre des moyens de refroidissement (314, 414, 514) des parois du canal de coulée secondaire, chaque cycle de production normal comprenant les étapes:

a) d'injection d'une matière plastique fondue chaude à travers le canal de coulée primaire (310, 410, 509) via le canal de coulée secondaire incliné (311, 411, 511) et l'ouverture de restriction afin de remplir la cavité (304, 404, 504),

b) de refroidissement des parois du canal de coulée secondaire incliné (311, 411, 511) et de la cavité du moule (304, 404, 504) en produisant ainsi un produit moulé,

c) de déplacement de la première partie de moule (302, 402, 502) par rapport à la seconde partie de moule (303, 403, 503) de façon à libérer le produit moulé, le procédé comprenant en outre, lorsque le cycle de production normal est terminé, les étapes consistant à:

d) séparer les première (307, 407, 517) et seconde sections (308, 408, 518) afin d'enlever une empreinte de ce canal de coulée primaire qui s'est solidifiée sur toute sa section transversale de façon à rétablir le cycle de production normal succédant à cette fin du cycle, caractérisé en ce que l'étape (a) comprend l'étape:

a1) d'injection à travers le canal de coulée secondaire incliné (311, 411, 511) qui mène directement de la jonction entre ces première et seconde sections à la cavité de moulage (304, 404, 504),

en ce que l'étape b) comprend l'étape:

b1) de refroidissement des parois du canal de coulée secondaire (311, 411, 511) de telle sorte qu'il ne se solidifie pas sur toute sa section transversale mais reste à l'état fondu dans une zone centrale,

en ce que l'étape c) comprend l'étape:

c1) de dégagement du produit moulé sans dégagement d'aucune empreinte de ce canal de coulée secondaire incliné, et en ce que l'étape d) comprend l'étape:

d1) d'enlèvement d'une empreinte du canal de coulée secondaire incliné au moment de la séparation de la première et seconde sections.

4. Procédé selon la revendication 3, caractérisé en ce qu'il comprend l'étape supplémentaire consistant à:

e) chauffer au moins une région des parois du système de canal de coulée primaire afin de réduire ou d'empêcher les pertes de chaleur de la matière plastique injectée à l'endroit des parois du système de canal de coulée primaire.

5. Procédé selon la revendication 3, caractérisé en ce que l'étape d1) comprend l'étape supplémentaire consistant à:

d2) subdiviser l'unité combinée de l'empreinte solidifiée de la matière plastique dans le système de canal de coulée primaire et de l'empreinte solidifiée de la matière plastique dans le canal de coulée secondaire de façon à enlever l'empreinte solidifiée de la matière plastique dans le canal de coulée secondaire incliné.

6. Procédé de moulage cyclique par injection de matières plastiques avec canal de coulée refroidi ou canal de coulée isolé, dans lequel chaque cycle de production comprend les étapes consistant à:

a) fournir un moule ayant une première partie de moule (302, 402, 502) et une seconde partie de moule (303, 403, 503) définissant une cavité de moulage (304, 404, 504) entre elles, la première et la seconde partie étant déplaçables l'une par rapport à l'autre et définissant une direction d'ouverture du moule (320, 420, 520);

b) fournir la seconde partie de moule (303, 403, 503) avec des première et seconde sections séparables (307, 407, 517; 308, 408, 518) la première section comprenant un canal de coulée primaire (340, 410, 509) et la seconde section comprenant un canal de coulée secondaire (311, 411, 511);

c) injecter une matière plastique chaude à l'état fondu dans le canal de coulée primaire (310, 410, 509);

d) diriger la matière plastique injectée à travers le canal de coulée primaire jusque dans le canal de coulée secondaire incliné;

e) conduire la matière plastique dirigée à travers le canal de coulée secondaire incliné jusqu'à la cavité de moulage (304, 404, 504);

f) refroidir la matière plastique menée dans le canal de coulée secondaire incliné en transférant de la chaleur de la matière plastique aux parois du canal de coulée secondaire incliné;

g) refroidir la matière plastique conduite dans la cavité de moulage (304, 404, 504) par un système de refroidissement de la cavité, la matière plastique refroidie se solidifiant en créant un produit moulé; et

h) éjecter le produit moulé de la cavité de moulage;

caractérisé en ce que la matière plastique menée est refroidie dans le canal de coulée secondaire de telle sorte que celui-ci ne se solidifie pas sur toute sa section transversale mais se solidifie sur une région externe et reste à l'état fondu dans sa zone centrale et en ce que le produit moulé est éjecté de la cavité de moulage sans qu'il y ait d'empreinte en matière plastique du canal de coulée secondaire.

**Patentansprüche**

1. Eine Kunststoff-Spritzgießform für zyklischen Betrieb, enthaltend ein erstes Formteil (302, 402, 502) und ein zweites Formteil (303, 403, 503), die zwischen sich einen Formenhohlraum (304, 404, 504) bilden, wobei das erste und das zweite Formteil relativ zueinander bewegbar sind, um eine geformtes Produkt aus der Form freizugeben und eine Formöffnungsrichtung (320, 420, 520) definiert wird, wobei das zweite Formteil einen einen primären Eingußkanal (310, 410, 509) umfassenden ersten und zweiten Abschnitt (307, 407, 517 bzw. 308, 408, 518) enthält, wobei der erste und zweite Abschnitt bei Beendigung des normalen zyklischen Betriebes voneinander trennbar sind und die Entfernung eines Abdrucks des primären Eingußkanals erlauben, um den normalen Produktionszyklus wiederherzustellen, wobei der primäre Eingußkanal (310, 410, 509) in einen sekundären Eingußkanal (311, 411, 511) verläuft, der zu dem erwähnten Formenhohlraum (304, 404, 504) führt, wobei de sekundäre Eingußkanal zur Formöffnungsrichtung (320, 420, 520) geneigt ist, und wobei die Form ferner Mittel (314, 414, 514) zur Kühlung des Formenhohlraums und der Wände des sekundären Eingußkanals enthält, dadurch gekennzeichnet, daß die Kühlmittel (314, 414, 514) wirksam sind, um eine Kühlung der Wände des geneigten sekundären Eingußkanals (311, 411, 511) zu ermöglichen, so daß der Eingußkanal während des normalen zyklischen Betriebs nicht über seinen ganzen Querschnittsbereich erstarrt, sondern in einer mittleren Zone geschmolzen bleibt;

Der geneigte sekundäre Eingußkanal (311, 411, 511) führt unmittelbar von der Verbindung zwischen dem ersten Abschnitt (307, 407, 517) und dem zweiten Abschnitt (308, 408, 508) hin zu dem gekühlten Formenhohlraum (304, 404, 504), so daß kein Abdruck des geneigten sekundären Eingußkanals während des normalen zyklischen Betriebs für das geformte Produkt gelöst werden kann, sondern erst nach Beendigung des normalen Produktionszyklus kann der Abdruck des geneigten sekundären Eingußkanals nach Trennung des ersten und zweiten Abschnitts entfernt werden.

2. Eine Kunststoff-Spritzform nach Anspruch 1, dadurch gekennzeichnet, daß die Wände des primären Eingußkanals (509) durch Heizmittel (515) erhitzt werden.

3. Ein Verfahren zum Kunststoff-Spritzgießen mit isolierten oder gekühlten Eingußkanälen unter Verwendung einer Form für zyklischen Betrieb, enthaltend ein erstes Formteil (302, 402, 502) und ein zweites Formteil (303, 403, 503), die zwischen sich einen Formenhohlraum (304, 404, 504) bilden, wobei das erste und das zweite Formteil relativ zueinander bewegbar sind und eine Formöffnungsrichtung (320, 420, 520) definieren, wobei das zweite Formteil einen einen primären Eingußkanal (310, 410, 509) umfassenden ersten und zweiten Abschnitt (307, 407, 517 bzw. 308, 408, 518) enthält, wobei der primäre Eingußkanal in einen sekundären Eingußkanal (311, 411, 511) verläuft, der zu der genannte Öffnungsrichtung geneigt ist und über eine begrenzende Eingußstelle (312, 412, 512) zu dem genannten Formenhohlraum führt, und wobei die Form ferner Mittel (314, 414, 514) zum Kühlen der Wände des sekundären Eingußkanals enthält, und wobei jeder normale Produktionszyklus die folgenden Schritte enthält:

(a) Injizieren eines heißen geschmolzenen Kunstoffs durch den primären Eingußkanal (310, 410, 509) über den geneigten sekundären Eingußkanal (311, 411, 511) und die begrenzende Eingußstelle, um den Formenhohlraum (304, 404, 504) zu füllen,

(b) Kühlen der Wände des geneigten sekundären Eingußkanals (311, 411, 511) und des Formenhohlraums (304, 404, 504), um dadurch das geformte Produkt herzustellen,

(c) Bewegung des ersten Formteils (302, 402, 502) in bezug auf das zweite Formteil (303, 403, 503), um das geformte Produkt freizugeben,

wobei das Verfahren, wenn der normale Produktionszyklus beendet ist, zusätzlich umfaßt:

(d) Trennung des ersten Abschnitts (307, 407, 517) und des zweiten Abschnitts (308, 408, 518), um einen Eingußkanal-Abdruck des primären Eingußkanals zu entfernen, der über seinen gesamten Querschnittsbereich erstarrt ist, um im Anschluß an eine solche Beendigung den normalen Produktionszyklus wiederherzustellen, wobei das Verfahren gekennzeichnet ist durch:

Schritt (a) enthaltend den Schritt:

(a1) Injizieren durch den geneigten sekundären Eingußkanal (311, 411, 511), der direkt von der Verbindung zwischen dem ersten und zweiten Abschnitt zu dem genannten Formenhohlraum (304, 404, 504) führt,

Schritt (b) enthaltend den Schritt:

(b1) Kühlen der Wände des geneigten sekundären Eingußkanals (311, 411, 511), so daß er nicht über seinen ganzen Querschnittsbereich erstarrt, sondern in einer mittleren Zone des Bereichs geschmolzen bleibt,

Schritt (c) enthaltend den Schritt:

(c1) Freigabe des geformten Produkts ohne einen Eingußkanal-Abdruck des genannten geneigten sekundären Eingußkanals zu entfernen,

Schritt (d) enthaltend den Schritt:

(d1) Entfernung eines Eingußkanal-Abdrucks des geneigten sekundären Eingußkanals bei Trennung des ersten und zweiten Abschnitts.

4. Ein Verfahren nach Anspruch 3, enthaltend den zusätzlichen Schritt:

(e) Erhitzen wenigstens eines Bereichs der Wände des primären Eingußkanal-Systems, um einen Wärmeverlust von dem injizierten Kunststoff zum Bereich der Wände des primären Eingußkanal-Systems zu verringern oder zu verhindern.

5. Ein Verfahren nach Anspruch 3, bei dem der Schritt (d1) den zusätzlichen Schritt enthält:

(d2) Unterteilung der kombinierten Einheit des erstarrten Abdrucks des Kunstoffs in dem primären Eingußkanal-System und des erstarrten Abdrucks des Kunststoffs in dem geneigten sekundären Eingußkanal, um den erstarrten Abdruck des Kunststoffs in dem geneigten zweiten Eingußkanal zu entfernen.

6. Ein Verfahren zum zyklischen Kunststoff-Spritzgießen mit isolierten, oder gekühlten Eingußkanälen, bei dem jeder Produktionszyklus die Schritte enthält:

(a) Vorsehen einer Form mit einem ersten Formteil (302, 402, 502) und einem zweiten Formteil (303, 403, 503), die zwischen sich einen Formenhohlraum (304, 404, 504) bilden, wobei das erste und zweite Teil relativ zueinander bewegbar sind und eine Formöffnungsrichtung (320, 420, 520) definieren;

(b) Versehen des ersten Formteils (303, 403, 503) mit einem ersten Abschnitt (307, 407, 517) und einem von diesem trennbaren zweiten Abschnitt (308, 408, 518), wobei der erste Abschnitt einen primären Eingußkanal (310, 410, 509) und der zweite Abschnitt einen sekundären Eingußkanal (311, 411, 511) enthält;

(c) Injizieren eines heißen geschmolzenen Kunststoffs in den primären Eingußkanal (310, 410, 509);

(d) Leiten des injizierten Kunststoffs durch den primären Eingußkanal in den geneigten sekundären Eingußkanal;

(e) Einleiten des Kunststoffs durch den geneigten sekundären Eingußkanal in den Formenhohlraum (304, 404, 504);

(f) Kühlen des Kunststoffs in dem geneigten sekundären Eingußkanal durch Übertragung von Hitze vom Kunststoff zu den Wänden des geneigten sekundären Eingußkanals;

(g) Kühlen des in dem Formenhohlraum (304, 404, 504) eingeleiteten Kunststoffs durch ein Hohlraum-Kühlsystem, wodurch der gekühlte Kunststoff erstarrt und dadurch ein geformtes Produkt erzeugt wird; und

(h) Auswerfen des geformten Produkts aus dem Formenhohlraum; gekennzeichnet durch Kühlen des Kunststoffs in dem sekundären Eingußkanal, so daß er nicht über dessen gesamten Querschnittsbereich erstarrt, sondern in einem äußeren Bereich erstarrt und in einem mittleren Bereich geschmolzen bleibt; und Auswerfen des geformten Produkts aus dem Formenhohlraum ohne einen Kunststoffabdruck des sekundären Eingußkanals.

FIG. 1

FIG. 3

FIG. 2          PRIOR ART

2

FIG. 5

FIG. 4